# EUROPEAN PATENT SPECIFICATION

(11) **EP 3 988 431 B1**
(45) Date of publication and mention of the grant of the patent: **23.08.2023**
(21) Application number: 21197393.8
(22) Date of filing: 17.09.2021
(51) Int. Cl.: B62D 25/08, B62D 27/02, B23K 11/11

(54) **PANEL JOINT STRUCTURE, FRONT BODY STRUCTURE, AND VEHICLE**
PANEELVERBINDUNGSSTRUKTUR, VORDERWAGENSTRUKTUR UND FAHRZEUG
STRUCTURE DE JOINT DE PANNEAU, STRUCTURE AVANT DE CARROSSERIE ET VÉHICULE

(30) Priority: 22.10.2020 JP 2020177556
(43) Date of publication of application: 27.04.2022
(73) Proprietor: MAZDA MOTOR CORPORATION, Hiroshima 730-8670 (JP)
(72) Inventor: WAKABAYASHI, Mitsuru, Fuchu-cho, Aki-gun, 730-8670 (JP); MIYAMOTO, Koji, Fuchu-cho, Aki-gun, 730-8670 (JP); NAKAMAE, Takayuki, Fuchu-cho, Aki-gun, 730-8670 (JP); KAWAI, Noriyuki, Fuchu-cho, Aki-gun, 730-8670 (JP); OE, Teppei, Fuchu-cho, Aki-gun, 730-8670 (JP); KIMURA, Hiroki, Fuchu-cho, Aki-gun, 730-8670 (JP); YAMAMOTO, Kenichi, Fuchu-cho, Aki-gun, 730-8670 (JP); KAGIMOTO, Koki, Fuchu-cho, Aki-gun, 730-8670 (JP)
(74) Representative: Müller-Boré & Partner Patentanwälte PartG mbB

(56) References cited:
- DE-A1- 3 151 266
- JP-A- S58 188 582
- JP-A- 2006 167 764
- JP-A- 2006 213 262
- JP-A- 2010 227 981
- US-A1- 2009 195 031

## Description

### [Technical Field]

The present invention relates to a panel joint structure, in detail, a panel joint structure that includes: a first panel member including a panel body section and a first flange section that extends from the panel body section via a corner section; and a second panel member that is arranged to oppose the first flange section and that fixedly joins the first flange section of the first panel member and the second panel member by a joint section and an adhesive.

### [Background Art]

Conventionally, in a joint technique (for example, weld bonding) of a flange section using both of adhesion by an adhesive and a joint section produced by spot welding or the like, in order to reliably guarantee joint strength of the adhesive, it is beneficial to form an adhesive application space capable of securing a sufficient thickness of the adhesive while providing the joint section as disclosed in Patent document 1.

Meanwhile, when the sufficient thickness of the adhesive is secured and a peeling load is applied to the adhesive due to a repeated load, a stress concentrated portion is generated in the adhesive, which possibly serves as an origin of a crack.

Once the adhesive cracks, a crack growth speed of the adhesive is high, and the adhesive no longer contributes to strength. As a result, the stress is concentrated on the joint section (a nugget) by spot welding, and the joint section ruptures.

When such a panel joint structure is adopted for a panel joint structure of an automobile, the peeling load is applied to the adhesive due to the repeated load during normal travel of the vehicle.

Thus, it is desired to suppress the crack from being produced to the adhesive.

By the way, Patent document 2 discloses a structure of providing a raised section, a raised surface of which is parallel with a cabin-side flange, in a corner section of the cabin-side flange and filling a space between the raised section and the other flange, which opposes and abuts this cabin-side flange, with the adhesive.

However, the structure disclosed in Patent document 2 is insufficient from a perspective of reducing the peeling load on a flange corner section side end portion of the adhesive.

### [Prior Art Documents]

### [Patent documents]

[Patent document 1] JP-A-2004-82136
[Patent document 2] JP-A-2006-213262

DE 31 51 266 A1 describes that an adhesion connection of a baggage compartment flap and of a reinforcing part which is provided on the inside of said flap, is initially connected to the baggage compartment flap by an edge rim and is thus bonded thereto.

### [Summary]

### [Problem to be solved]

In view of the above, the present invention has a purpose of providing a panel joint structure capable of suppressing stress concentration on a flange corner section side end portion of an adhesive during application of a peeling load.

### [Means for solving the Problem]

A panel joint structure according to the present invention is defined in claim 1.

The above-described panel member includes a metal member and fiber reinforced plastic, and also includes joining of the same materials, such as steel plates or aluminum plates, and joining of different materials, such as joining of the steel plate and the aluminum plate.

In addition, the above-described joint section includes machine joining, that is, joining and one-sided machine joining using a bolt, a nut, a rivet, and a self-piercing rivet (SPR), and also includes spot welding as resistance welding, friction stir joint welding, and laser welding.

Furthermore, the above-described corner section is not limited to a corner section in which the panel body section and the first flange section cross each other at a right angle. In order to enable a molding process, the corner section includes a corner section in which the panel body section and the first flange section are coupled to each other via a curved portion (or a rounded portion).

The above configuration has the following effects.

By providing the load transmission section, a peeling load that is applied to the corner section side end portion of the adhesive is transmitted from the panel body section to the flange distal end side end portion of the load transmission section via the load transmission section. In this way, it is possible to reduce the load that is applied to the corner section side end portion of the adhesive. Here, the peeling load means a peeling load in a direction to separate the first flange section and the second panel member from each other.

In addition, the flange distal end side end portion of the load transmission section serves as an origin of deformation, and this origin of deformation is located near the joint section. Thus, it is possible to diffuse the load to the joint section and to thereby reduce the peeling load that is applied to the corner section side end portion of the adhesive.

Therefore, it is possible to suppress stress concentration on the flange corner section side end portion of the adhesive during application of the peeling load. That is, it is possible to diffuse the peeling load to the joint section via the load transmission section and to thereby reduce the load that is applied to the corner section side end portion of the adhesive.

In one aspect of the present invention, the plural joint sections are provided at spaced intervals in a longitudinal direction of the first flange section, and the flange distal end side end portion of the load transmission section is provided on an imaginary line that connects central portions of the joint sections, each of which is adjacent to the load transmission section in the longitudinal direction of the flange section.

With the above configuration, it is possible to reliably transmit the load to the joint sections and to thereby diffuse the load.

According to the invention, the peeling load that is applied to the second panel member is also transmitted to the flange distal end side end portion of the second load transmission section. Since the flange distal end side end portion of the load transmission section in the first panel member and the flange distal end side end portion of the second load transmission section in the second panel member are provided at substantially the same positions, it is possible to concentrate the stress on a point. As a result, it is possible to reliably diffuse the load to the joint section.

In one aspect of the present invention, the load transmission section is formed by a bead, and an internal space of the bead is filled with the adhesive.

With the above configuration, not only the corner section but also the internal space of the bead are filled with the adhesive. Therefore, it is possible to suppress the stress concentration on the corner section side end portion of the adhesive.

In one aspect of the present invention, each of the load transmission section and the second load transmission section is formed by a bead, and an internal space of each of the beads is filled with the adhesive.

With the above configuration, in the configuration that the first panel member and the second panel member respectively include the load transmission section and the second load transmission section formed by the beads, not only the corner section but also the internal space of each of the beads are filled with the adhesive. Therefore, it is possible to suppress the stress concentration on the corner section side end portion of the adhesive and to improve joint strength by the adhesive.

In one aspect of the present invention, a flange distal end side end portion of the adhesive in the internal space of the bead is provided in a region between a corner section side end portion of the joint section and the flange distal end side end portion of the joint section in the short direction of the flange section.

With the above configuration, the flange distal end side end portion, in which a thickness of the adhesive is reduced, is provided in the above range. Thus, the following effects can be exerted.

The flange distal end side end portion of the adhesive separates from the panel body section, which is applied with the load, to the flange distal end side in the short direction of the flange section. In addition, the flange distal end side end portion is likely to be deformed since bending moment that is applied thereto is large. Since this flange distal end side end portion, which is likely to be deformed, is provided in the region, the region, which corresponds to the joint section, in the load transmission section is likely to be deformed, and the load can be diffused to the joint section.

In one aspect of the present invention, the bead includes an inclined surface that is inclined in a direction toward the second panel member as being stretched toward a distal end side direction in the short direction of the first flange section, and the inclined surface couples the panel body section and the first flange section of the first panel member.

With the above configuration, a component (a flange perpendicular component) of the peeling load in a perpendicular direction to the first flange section is reduced by the inclined surface. In this way, it is possible to reduce the peeling load that is applied to the corner section side end portion of the adhesive.

In detail, in the inclined surface, the component (the flange perpendicular component) in the perpendicular direction to the first flange section can be broken down into a component force in a direction along the inclined surface and a component force in an orthogonal direction to the inclined surface. The component force in the orthogonal direction to the inclined surface is an actual peeling load that is applied to the adhesive. This component force in the orthogonal direction to the inclined surface is smaller than the peeling load, which is applied to the first panel member. Therefore, it is possible to reduce the peeling load that is applied to the corner section side end portion of the adhesive.

### [Advantage]

The present invention has an effect capable of suppressing stress concentration on the flange corner section side end portion of the adhesive during application of the peeling load.

### [Brief Description of the Drawings]

[Fig. 1] Fig. 1 is a perspective view illustrating a panel joint structure according to a first embodiment not belonging to the present invention.
[Fig. 2] Fig. 2 is an enlarged perspective view of a main section in Fig. 1.
[Fig. 3] Fig. 3(a) is a cross-sectional view that is taken along line A-A in Fig. 2, and Fig. 3(b) is a cross-sectional view that is taken along line B-B in Fig. 2.
[Fig. 4] Fig. 4 is a cross-sectional view that is taken along line C-C in Fig. 2.
[Fig. 5] Fig. 5 is a perspective view illustrating a second embodiment of a panel joint structure not belonging to the present invention.
[Fig. 6] Fig. 6 is a perspective view illustrating a third embodiment of a panel joint structure according to the present invention.
[Fig. 7] Fig. 7 is a cross-sectional view that is taken along line D-D in Fig. 6.
[Fig. 8] Fig. 8 is a perspective view illustrating yet a fourth embodiment of a panel joint structure not belonging to the present invention.
[Fig. 9] Fig. 9 is a perspective view illustrating a fifth embodiment not belonging to the invention in which the panel joint structure is adopted for a front body structure of a vehicle.

### [Embodiments for Carrying Out the Invention]

A purpose of suppressing stress concentration on a flange corner section side end portion of an adhesive during application of a peeling load is achieved particularly by such a configuration that includes: a first panel member including a panel body section and a first flange section extending from the panel body section via a corner section; a second panel member that is arranged to oppose the first flange section; a joint section that joins the first flange section and the second panel member in a state where the first flange section and the second panel member contact each other; and an adhesive that is continuously provided along a longitudinal direction of the corner section and adheres the first flange section and the second panel member, in which the first panel member includes a load transmission section near the joint section, the load transmission section being provided between the panel body section and the first flange section and being set such that an angle defined with the panel body section is larger than an angle defined by the panel body section and a portion in a short direction of the first flange section, and in which, in the short direction of the first flange section, a flange distal end side end portion of the load transmission section in the short direction of the flange section is provided to be located in a region between a corner section side end portion of the joint section and the flange distal end side end portion of the joint section in the short direction of the flange section.

### [First Embodiment] (not belonging to the invention)

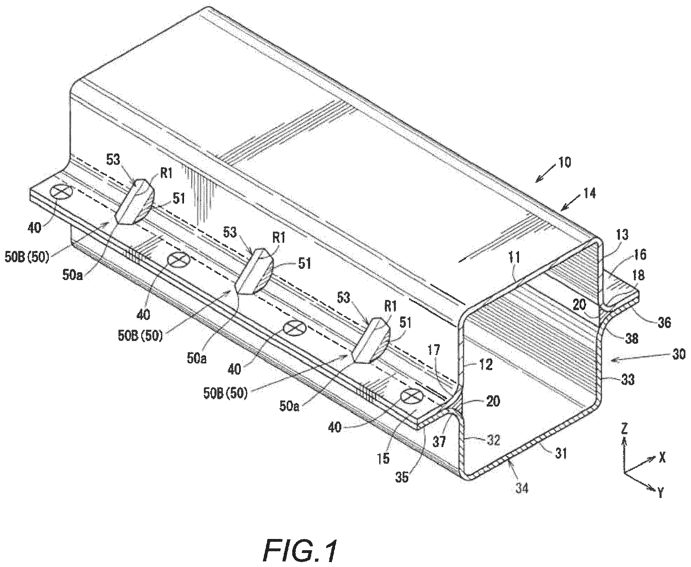

A detailed description with, reference to the drawings of Figs. 1 - 4, will be made on a panel joint structure according to a first embodiment not belonging to the present invention. All of the features as shown in the drawings may not necessarily be essential.

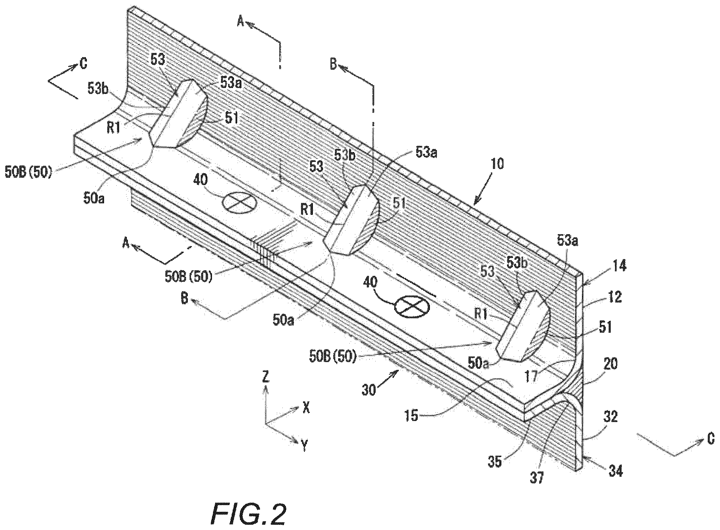

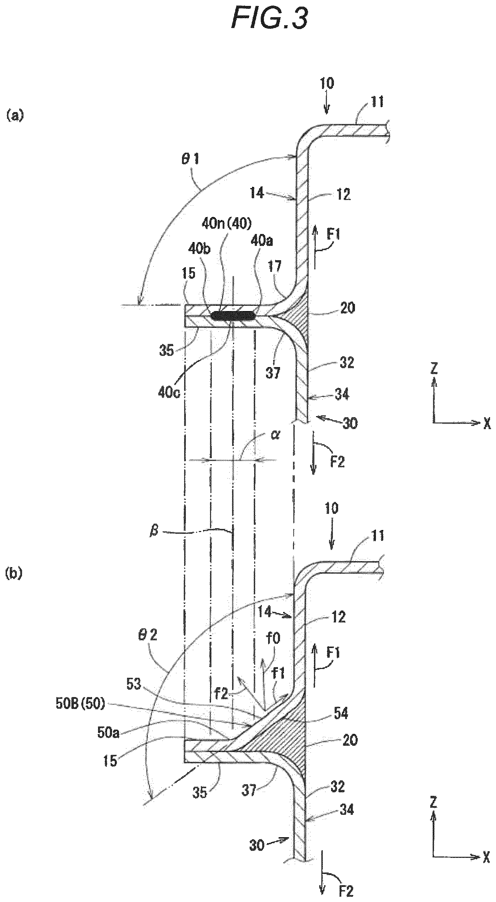

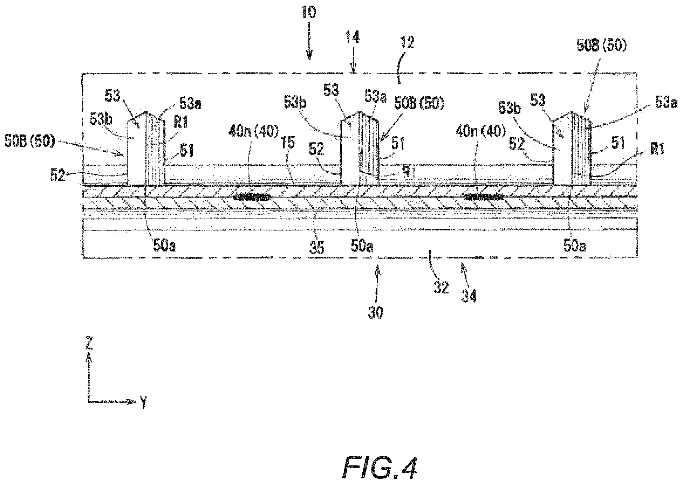

The drawings each illustrate a panel joint structure. Fig. 1 is a perspective view illustrating the panel joint structure, Fig. 2 is an enlarged perspective view of a main section in Fig. 1, Fig. 3(a) is a cross-sectional view that is taken along line A-A in Fig. 2, Fig. 3(b) is a cross-sectional view that is taken along line B-B in Fig. 2, and Fig. 4 is a cross-sectional view that is taken along line C-C in Fig. 2.

In the drawings, an arrow X indicates a short direction of first flange sections 15, 16, an arrow Y indicates a longitudinal direction of the first flange sections 15, 16, and an arrow Z indicates a direction that is orthogonal to each of the X-direction and the Y-direction. The short direction (the X-direction) may be perpendicular to the longitudinal direction (the Y-direction).

As illustrated in Fig. 1, this panel joint structure includes a first panel member 10 and a second panel member 30.

On a cross section that is defined by an XZ-plane (a coordinate plane), the first panel member 10 particularly includes: a first side wall 11 that extends in the X-direction; and a second side wall 12 and a third side wall 13, each of which extends in the Z-direction from respective one of one end portion (a left end portion in Fig. 1) and the other end portion (a right end portion in Fig. 1) of this first side wall 11. The second side wall 12 and the third side wall 13 oppose each other, and the above-described side walls 11, 12, 13 particularly constitute a panel body section 14.

Particularly, the first flange sections 15, 16 are integrally formed with the above-described second side wall 12 and third side wall 13, respectively, and respectively extend outward from end portions of the second side wall 12 and the third side wall 13 on opposite sides from end portions on the first side wall 11 side. The panel body section 14 and the first flange sections 15, 16 constitute a section having a hat-shaped cross section.

Further particularly, a curved corner section 17 is formed between the first flange section 15 on one side and one side (a lower side in Fig. 1) of the second side wall 12, the other side (an upper side in Fig. 1) of which is coupled to the first side wall 11.

Similarly, a curved corner section 18 is also formed between the first flange section 16 on the other side and one side (a lower side in Fig. 1) of the third side wall 13, the other side (an upper side in Fig. 1) of which is coupled to the first side wall 11.

That is, the first flange section 15 on the one side extends outward from the second side wall 12 of the panel body section 14 via the corner section 17. Meanwhile, the first flange section 16 on the other side extends outward from the third side wall 13 of the panel body section 14 via the corner section 18. Here, the above-described first panel member 10 extends in the Y-direction that is the longitudinal direction of the first flange sections 15, 16.

Particularly, on the cross section that is defined by the XZ-plane (the coordinate plane), the above-described second panel member 30 includes: a first side wall 31 that extends in the X-direction; and a second side wall 32 and a third side wall 33, each of which extends in the Z-direction from respective one of one end portion (a left end portion in Fig. 1) and the other end portion (a right end portion in Fig. 1) of this first side wall 31. The second side wall 32 and the third side wall 33 oppose each other, and the above-described side walls 31, 32, 33 constitute a second panel body section 34.

Further particularly, second flange sections 35, 36 are integrally formed with the above-described second side wall 32 and third side wall 33, respectively, and respectively extend outward from end portions of the second side wall 32 and the third side wall 33 on opposite sides from the end portions on the first side wall 31 side. The second panel body section 34 and the second flange sections 35, 36 constitute a portion having the hat-shaped cross section.

As illustrated in Fig. 1, the first side wall 11 of the first panel member 10 and the first side wall 31 of the second panel member 30 oppose each other in a state of being separated from each other in the Z-direction.

Further particularly, a curved second corner section 37 is formed between the second flange section 35 on the one side and one side (an upper side in Fig. 1) of the second side wall 32, the other side (a lower side in Fig. 1) of which is coupled to the first side wall 31.

Similarly, a curved second corner section 38 is also formed between the second flange section 36 on the other side and one side (an upper side in Fig. 1) of the third side wall 33, the other side (a lower side in Fig. 1) of which is coupled to the first side wall 31.

That is, the second flange section 35 on the one side extends outward from the second side wall 32 of the second panel body section 34 via the second corner section 37. Meanwhile, the second flange section 36 on the other side extends outward from the third side wall 33 of the second panel body section 34 via the second corner section 38. Here, the above-described second panel member 30 extends in the Y-direction that is a longitudinal direction of the second flange sections 35, 36.

As illustrated in Fig. 1, the second panel member 30 is particularly arranged to oppose the first flange sections 15, 16 of the first panel member 10. In detail, the second flange sections 35, 36 on the one side and the other side of the second panel member 30 are arranged to respectively oppose the first flange sections 15, 16 on the one side and the other side of the first panel member 10 in a state of respectively contacting the first flange sections 15, 16.

As illustrated in Fig. 1, a joint section 40 is provided to join the first flange section 15 of the first panel member 10 and the second flange section 35 of the second panel member 30 in a state where the first flange section 15 and the second flange section 35 contact each other. Also, on the other side, the joint section 40 is particularly provided to join the first flange section 16 and the second flange section 36 in a state where the first flange section 16 and the second flange section 36 contact each other. However, the joint section on the other side is not illustrated.

As illustrated in Fig. 1, the plural above-described joint sections 40 are provided at specified intervals in the longitudinal direction of the flange sections 15, 35, that is, in the Y-direction.

In this embodiment, each of the first panel member 10 and the second panel member 30 is formed of a steel plate. Thus, each of the above-described joint sections 40 is particularly formed by a nugget (or a molten-solidified section) 40n (see Fig. 3 and Fig. 4) by spot welding.

As illustrated in Fig. 1 to Fig. 3, an adhesive 20 is continuously provided along the longitudinal direction (the Y-direction) in portions between the opposing corner sections 17, 37 and the opposing corner sections 18, 38. The adhesive 20 particularly adheres each of the first flange sections 15, 16 and the second panel member 30.

In this first embodiment, it is configured that the adhesive 20 particularly adheres a portion on the corner section 17 side of the opposing first flange section 15 and a portion on the corner section 37 side of the opposing second flange section 35 and that the adhesive 20 particularly adheres a portion on the corner section 18 side of the opposing first flange section 16 and a portion on the corner section 38 side of the opposing second flange section 36.

A structure adhesive is particularly used as the above-described adhesive 20, and a representative example thereof is an epoxide-based adhesive. However, the adhesive 20 is not limited to the epoxide-based adhesive. Any of the structure adhesives such as an urethane-based adhesive, an acrylic adhesive, or a modified silicone-based adhesive may be used. In addition, any type of the adhesives can be used as long as such an adhesive is used to join a vehicle body.

As illustrated in Fig. 1 to Fig. 4, the above-described first panel member 10 is particularly provided with a load transmission section 50 in a manner to be located near each of the joint sections 40.

The above-described load transmission section 50 is particularly formed by a bead 50B. This load transmission section 50 (the bead 50B) is provided between the second side wall 12 and the first flange section 15 of the panel body section 14.

As illustrated in Fig. 3(b), an inclined surface 53, which will be described below, of the above-described load transmission section 50 is set such that an angle θ2 defined with the second side wall 12 of the panel body section 14 is larger than an angle θ1 (see Fig. 3(a)) defined by the second side wall 12 and a portion in the short direction of the first flange section 15 in the panel body section 14.

In this first embodiment, the angle θ2, which is defined by the inclined surface 53 of the load transmission section 50 and the second side wall 12, is particularly set as an obtuse angle, more specifically, at 128 degrees. Meanwhile, the angle θ1, which is defined by the portion in the short direction of the first flange section 15 and the second side wall 12, is particularly set at 90 degrees. That is, the angles θ1, θ2 are set such that a relational expression θ2 > θ1 is satisfied. However, each of these angles θ1, θ2 is not limited to have the exemplified numerical value.

As illustrated in Fig. 2 and Fig. 4, the above-described load transmission section 50 (the bead 50B) particularly includes: a pair of vertical walls 51, 52 separated in the Y-direction; and the inclined surface 53 that couples these vertical walls 51, 52. The inclined surface 53 is inclined in a direction toward the second flange section 35 of the second panel member 30 as being stretched toward a distal end side direction in the short direction of the first flange section 15.

The above-described inclined surface 53 particularly has two slant sections 53a, 53b that are inclined in opposite directions. Between these slant sections 53a, 53b, a ridgeline R1 is formed to be inclined in the direction toward the second flange section 35 as being stretched toward the distal end side direction of the first flange section 15.

The load transmission section 50 (the bead 50B) is particularly provided between the second side wall 12 and the first flange section 15 of the panel body section 14. In the Y-direction, the load transmission section 50 is provided between two each of the plural joint sections 40, 40.

As illustrated in Fig. 3, in the short direction of the first flange section 15, that is, in the X-direction, an end portion 50a on a flange distal end side of the above-described load transmission section 50 in the short direction of the flange section (hereinafter, simply described as a flange distal end side end portion 50a) is provided to be located in a region α (in detail, in an area on an extended line) between a corner section side end portion 40a of the joint section 40 and an end portion 40b on the flange distal end side of the joint section 40 in the short direction of the flange section (hereinafter, simply described as a distal end side end portion 40b).

In this embodiment, the flange distal end side end portion 50a of the load transmission section 50 is particularly provided on an imaginary line β that connects central portions 40c of the nuggets 40n as the joint sections 40.

When the above-described load transmission section 50 is provided just as described, a peeling load (at least one of loads F1, F2 illustrated in Fig. 3, in particular, the load F1) that is applied to a corner section side end portion of the adhesive 20 is transmitted from the panel body section 14 to the flange distal end side end portion 50a of the load transmission section 50 via the load transmission section 50. In this way, it is configured to reduce the load that is applied to the corner section side end portion of the adhesive 20.

In addition, the flange distal end side end portion 50a of the load transmission section 50 serves as an origin of deformation, and this origin of deformation is located near the joint section 40. In this way, it is configured to be able to diffuse the load to the joint section 40 and to thereby reduce the peeling load that is applied to the corner section side end portion of the adhesive 20.

In other words, the flange distal end side end portion 50a, which serves as the origin of deformation, in the load transmission section 50 is restrained by the joint sections 40, 40 from both sides in the Y-direction. In such a state, when the origin of deformation moves, the load is transmitted to the nuggets 40n as the joint sections 40. In this way, it is configured to diffuse the load to the joint sections 40 and to thereby reduce the peeling load that is applied to the corner section side end portion of the adhesive 20.

As a result, it is possible to suppress stress concentration on the flange corner section side end portion of the adhesive 20 during application of the peeling load. That is, it is configured to diffuse the peeling load to the joint section 40 via the load transmission section 50 and to thereby reduce the load that is applied to the corner section side end portion of the adhesive 20.

In particular, it is configured to provide the flange distal end side end portion 50a of the load transmission section 50 on the imaginary line β, which connects the central portions 40c of the joint sections 40, each of which is adjacent to the load transmission section 50 in the longitudinal direction of the flange section, and to thereby reliably transmit the load to the joint sections 40, so as to diffuse the load.

As illustrated in Fig. 2 and Fig. 3, the adhesive 20 is seamlessly and continuously provided along the longitudinal direction of the corner sections 17, 37, that is, the Y-direction. In addition, an internal space of the load transmission section 50 that is formed by the bead 50B, that is, an internal space 54 of the bead 50B is filled with the adhesive 20.

Just as described, it is particularly configured to fill not only the corner sections 17, 37 but also the internal space 54 of the bead 50B with the above-described adhesive 20 and to thereby suppress the stress concentration on the corner section side end portion of the adhesive 20.

Further particularly, as illustrated in Fig. 3(b), a flange distal end side end portion of the adhesive 20 in the internal space 54 of the above-described bead 50B is provided in the region α between the corner section side end portion 40a of the joint section 40 and the flange distal end side end portion 40b of the joint section 40 in the short direction of the flange section. In this embodiment, the entire internal space 54 of the bead 50B is filled with the adhesive 20.

As illustrated in Fig. 3(b), the flange distal end side end portion of the adhesive 20 separates from the panel body section, which is applied with the load, to the flange distal end side in the short direction of the flange section. In addition, the flange distal end side end portion of the adhesive 20 is likely to be deformed since bending moment that is applied thereto is large. This flange distal end side end portion, which is likely to be deformed, is provided in a range that corresponds to the region α in the longitudinal direction of the flange section. In this way, a region corresponding to the joint section 40 in the load transmission section 50 is likely to be deformed, and the load is diffused to the joint section 40.

As illustrated in Fig. 1 to Fig. 3, the above-described bead 50B particularly includes the inclined surface 53. With this inclined surface 53, the second side wall 12 and the first flange section 15 in the panel body section 14 of the first panel member 10 are coupled to each other obliquely.

In this way, it is configured to reduce a component of the peeling load F1 in a perpendicular direction to the first flange section 15 by the inclined surface 53 and to thereby reduce the peeling load that is applied to the corner section side end portion of the adhesive 20.

In detail, as illustrated in Fig. 3(b), in the inclined surface 53, a component in the perpendicular direction to the first flange section 15 (a flange perpendicular component) f0 can be broken down into a component force f1 in a direction along the inclined surface 53 and a component force f2 in an orthogonal direction to the inclined surface 53. The component force f2 in the orthogonal direction to the inclined surface 53 is the actual peeling load that is applied to the adhesive 20. The component force f2 in the orthogonal direction to the inclined surface 53 is smaller than the peeling load F1, which is applied to the first panel member 10. In this way, it is configured to reduce the peeling load that is applied to the corner section side end portion of the adhesive 20.

As described above, the panel joint structure in the first embodiment, which is illustrated in Fig. 1 to Fig. 4, is particularly provided with: the first panel member 10 including the panel body section 14 and the first flange section 15 that extends from the panel body section 14 via the corner section 17; the second panel member 30 that is arranged to oppose the first flange section 15; the joint section 40 that joins the first flange section 15 and the second panel member 30 in the state where the first flange section 15 and the second panel member 30 contact each other; and the adhesive 20 that is continuously provided along the longitudinal direction of the corner section 17 and adheres the first flange section 15 and the second panel member 30. The first panel member 10 includes the load transmission section 50 near the joint section 40. The load transmission section 50 is provided between the panel body section 14 and the first flange section 15 and is set such that the angle θ2 defined with the panel body section 14 (in particular, see the second side wall 12) is larger than the angle θ1 defined by the panel body section 14 and the portion in the short direction of the first flange section 15. In the short direction of the first flange section 15, the flange distal end side end portion 50a of the load transmission section 50 in the short direction of the flange section is provide to be located in the region α (in detail, in the area on the extended line of the region α) between the corner section side end portion 40a of the joint section 40 and the flange distal end side end portion 40b of the joint section 40 in the short direction of the flange section (see Fig. 1 to Fig. 4) .

This configuration particularly has the following effects.

Since the load transmission section 50 is provided, the peeling load that is applied to the corner section side end portion of the adhesive 20 is transmitted from the panel body section 14 to the flange distal end side end portion 50a of the load transmission section 50 via the load transmission section 50. In this way, it is possible to reduce the load that is applied to the corner section side end portion of the adhesive 20.

In addition, the flange distal end side end portion 50a of the load transmission section 50 serves as the origin of deformation, and this origin of deformation is located near the joint section 40. Therefore, it is possible to diffuse the load to the joint section 40 and to thereby reduce the peeling load that is applied to the corner section side end portion of the adhesive 20.

As a result, it is possible to suppress the stress concentration on the flange corner section side end portion of the adhesive 20 during the application of the peeling load. That is, it is possible to diffuse the peeling load to the joint section 40 via the load transmission section 50 and to thereby reduce the load that is applied to the corner section side end portion of the adhesive 20.

In addition, in the first embodiment, the plural joint sections 40 are provided at the spaced intervals in the longitudinal direction of the first flange section 15, and the flange distal end side end portion 50a of the load transmission section 50 is provided on the imaginary line β that connects the central portions 40c of the joint sections 40, each of which is adjacent to the load transmission section 50 in the longitudinal direction of the flange section (see Fig. 3).

With this configuration, it is possible to reliably transmit the load to the joint sections 40 and to thereby diffuse the load.

Furthermore, in the first embodiment, the load transmission section 50 is formed by the bead 50B, and the internal space 54 of the bead 50B is filled with the adhesive 20 (see Fig. 3(b)).

With this configuration, not only the corner section 17 but also the internal space 54 of the bead 50B are filled with the adhesive 20. Therefore, it is possible to suppress the stress concentration on the corner section side end portion of the adhesive 20.

Moreover, in the first embodiment, the flange distal end side end portion of the adhesive 20 in the internal space 54 of the bead 50B is provided in the region α between the corner section side end portion 40a of the joint section 40 and the flange distal end side end portion 40b of the joint section 40 in the short direction of the flange section (see Fig. 3).

With this configuration, the flange distal end side end portion, in which the thickness of the adhesive 20 is reduced, is provided in the range of the region α. Thus, the following effects can be exerted.

The flange distal end side end portion of the adhesive 20 separates from the panel body section, which is applied with the load, to the flange distal end side in the short direction of the flange section. In addition, the flange distal end side end portion of the adhesive 20 is likely to be deformed since the bending moment that is applied thereto is large. This flange distal end side end portion, which is likely to be deformed, is provided in the above range. In this way, the region α, which corresponds to the joint section 40, in the load transmission section 50 is likely to be deformed, and the load can be diffused to the joint section 40.

In addition, in the first embodiment, the bead 50B includes the inclined surface 53 that is inclined in the direction toward the second panel member 30 as being stretched toward the distal end side direction in the short direction of the first flange section 15. The panel body section 14 and the first flange section 15 of the first panel member 10 are coupled by the inclined surface 53 (see Fig. 1 to Fig. 4).

With this configuration, it is possible to reduce the component (the flange perpendicular component) of the peeling load F1 in the perpendicular direction to the first flange section 15 by the inclined surface 53 and to thereby reduce the peeling load that is applied to the corner section side end portion of the adhesive 20.

In detail, in the inclined surface 53, the component (the flange perpendicular component) f0 in the perpendicular direction to the first flange section 15 can be broken down into the component force f1 in the direction along the inclined surface 53 and the component force f2 in the orthogonal direction to the inclined surface 53. The component force f2 in the orthogonal direction to the inclined surface 53 is the actual peeling load that is applied to the adhesive 20. This component force f2 in the orthogonal direction to the inclined surface 53 is smaller than the peeling load F1, which is applied to the first panel member 10. Thus, it is possible to reduce the peeling load that is applied to the corner section side end portion of the adhesive 20.

### [Second Embodiment] (not belonging to the invention)

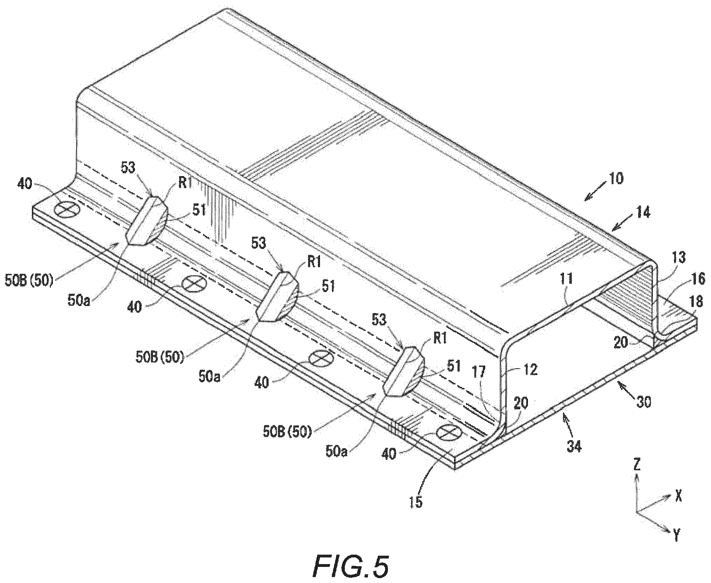

Fig. 5 is a perspective view illustrating a second embodiment of the panel joint structure not belonging to the present invention.

Similar to the panel joint structure in the first embodiment, in a panel joint structure in the second embodiment, which is illustrated in Fig. 5, the first panel member 10 is particularly formed to have the hat-shaped cross-section. Meanwhile, a panel body section 34 that is formed of a flat plate material is used for the second panel member 30.

Then, one side portion in the X-direction (a left portion in Fig. 5) and the other side portion in the X-direction (a right portion in Fig. 5) of the panel body section 34 are respectively arranged to oppose the first flange sections 15, 16 of the first panel member 10, and the joint section 40 is provided to join the second panel member 30 and each of the first flange sections 15, 16 in a state where the second panel member 30 and the first flange sections 15, 16 contact each other.

In other words, in this second embodiment, the panel joint structure joins the first panel member 10 having the hat-shaped cross section and the second panel member 30 in a flat plate shape.

Also, in the second embodiment illustrated in Fig. 5, the other configurations including that of the main section, the operation, and the effects are particularly the same as those in the above first embodiment. Thus, in Fig. 5, the same portions as those in the preceding drawings will be denoted by the same reference signs, and the detailed description thereon will not be made.

### [Third Embodiment]

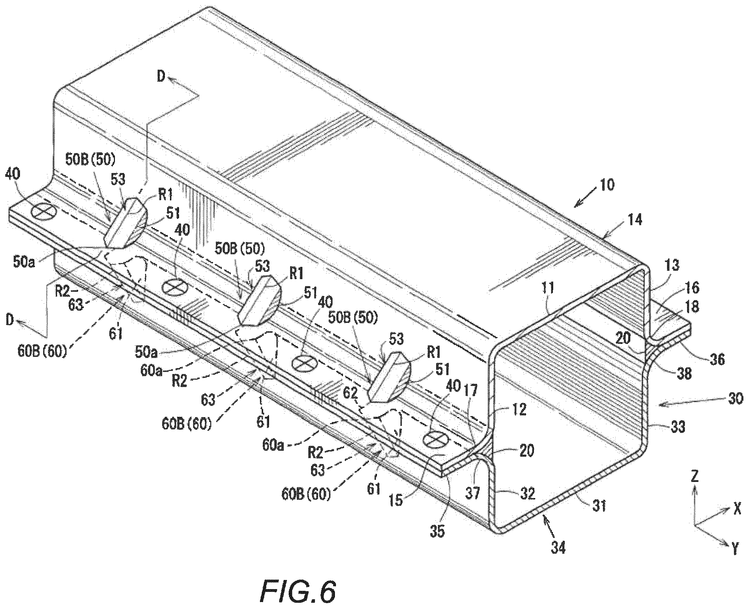

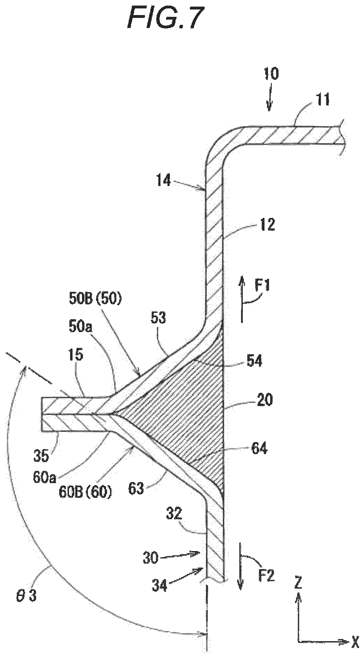

Fig. 6 is a perspective view illustrating an embodiment of the panel joint structure according to the present invention, and Fig. 7 is a cross-sectional view that is taken along line D-D in Fig. 6.

In this third embodiment illustrated in Fig. 6 and Fig. 7, in addition to the structure in the first embodiment illustrated in Fig. 1 to Fig. 4, a second load transmission section 60, which is formed by a second bead 60B, is also provided on the second panel member 30 side. This second load transmission section 60 is particularly formed to be symmetrical or substantially symmetrical to the load transmission section 50.

That is, as illustrated in Fig. 6 and Fig. 7, the above-described second panel member 30 is particularly provided with the second load transmission section 60 in a manner to be located near the joint section 40.

The above-described second load transmission section 60 is particularly formed by the second bead 60B, and this second load transmission section 60 (the second bead 60B) is provided between the second side wall 32 and the second flange section 35 of the second panel body section 34.

An inclined surface 63, which will be described below, of the above-described second load transmission section 60 is particularly set such that an angle θ3 defined with the second side wall 32 of the second panel body section 34 is larger than an angle (a right angle) defined by the second side wall 32 and a portion in a short direction of the second flange section 35 in the second panel body section 34.

In this third embodiment, the angle θ3, which is defined by the inclined surface 63 of the second load transmission section 60 and the second side wall 32, is particularly set as an obtuse angle, more specifically, at 125 degrees or about 125 degrees. Meanwhile, the angle, which is defined by the portion in the short direction of the second flange section 35 and the second side wall 32, is particularly set at 90 degrees or about 90 degrees. However, each of these angles is not limited to have the exemplified numerical value.

As illustrated in Fig. 6 and Fig. 7, the above-described second load transmission section 60 (the second bead 60B) particularly includes: a pair of vertical walls 61, 62 separated in the Y-direction; and the inclined surface 63 that couples these vertical walls 61, 62. The inclined surface 63 is inclined in a direction toward the first flange section 15 of the first panel member 10 as being stretched toward a distal end side direction in the short direction of the second flange section 35.

The above-described inclined surface 63 particularly has two slant sections that are inclined in opposite directions. Between these slant sections, a ridgeline R2 is formed to be inclined in the direction toward the first flange section 15 as being stretched toward the distal end side direction in the short direction of the second flange section 35.

The thus-formed second load transmission section 60 (the second bead 60B) is particularly provided between the second side wall 32 and the second flange section 35 of the second panel body section 34. In the Y-direction, the second load transmission section 60 is particularly provided between two each of the plural joint sections 40, 40 in the Y-direction.

In the short direction of the second flange section 35, that is, in the X-direction, a flange distal end side end portion 60a of the above-described second load transmission section 60 is particularly provided to be located in the region α (in detail, in the area on the extended line) between the corner section side end portion 40a of the joint section 40 and the distal end side end portion 40b of the joint section 40.

In this embodiment, the flange distal end side end portion 60a of the second load transmission section 60 in the short direction of the flange section is particularly provided on the imaginary line β that connects the central portions 40c of the nuggets 40n as the joint sections 40, each of which is adjacent to the second load transmission section 60 in the longitudinal direction of the flange section (see Fig. 3).

In addition, as illustrated in Fig. 6 and Fig. 7, the flange distal end side end portion 60a of the second load transmission section 60 and the flange distal end side end portion 50a of the load transmission section 50 in the above-described first panel member 10 are particularly provided at substantially the same positions.

Further particularly, as illustrated in Fig. 7, the load transmission section 50 on the first panel member 10 side and the second load transmission section 60 on the second panel member 30 side are respectively formed by the beads 50B, 60B, and the internal spaces 54, 64 of the beads 50B, 60B continue in the X-direction and the Z-direction. Then, each of these internal spaces 54, 64 is filled with the above-described adhesive 20.

As described above, in the third embodiment illustrated in Fig. 6 and Fig. 7, the second panel member 30 is provided with the second flange section 35 that extends from the second panel body section 34 via the second corner section 37, the second flange section 35 is arranged to oppose the first flange section 15, the second panel member 30 includes the second load transmission section 60 near the joint section 40, the second load transmission section 60 is provided between the second panel body section 34 and the second flange section 35 and is set such that the angle θ3 defined with the second panel body section 34 (see the second side wall 32) is larger than the angle (the right angle) defined by the second panel body section 34 (see the second side wall 32) and the portion in the short direction of the second flange section 35, and the flange distal end side end portion 60a of the second load transmission section 60 in the short direction of the flange section and the flange distal end side end portion 50a of the load transmission section 50 in the first panel member 10 are provided at substantially the same positions (see Fig. 6 and Fig. 7).

With this configuration, the peeling load F2 that is applied to the second panel member 30 is transmitted to the flange distal end side end portion 60a of the second load transmission section 60. Since the flange distal end side end portion 50a of the load transmission section 50 in the first panel member 10 and the flange distal end side end portion 60a of the second load transmission section 60 in the second panel member 30 are provided at substantially the same positions, it is possible to concentrate the stress on a point. As a result, it is possible to reliably diffuse the load to the joint section 40.

Particularly, in this third embodiment, the load transmission section 50 and the second load transmission section 60 are respectively formed by the beads 50B, 60B, and each of the continuous internal spaces 54, 64 of the beads 50B, 60B is filled with the adhesive 20 (see Fig. 7).

With this configuration, in the configuration that the first panel member 10 and the second panel member 30 respectively include the load transmission section 50 and the second load transmission section 60 that are respectively formed by the beads 50B, 60B, not only the corner sections 17, 37 but also the internal spaces 54, 64 of the beads 50B, 60B are filled with the adhesive 20. Thus, it is possible to suppress the stress concentration on the corner section side end portion of the adhesive 20 and to improve joint strength by the adhesive 20.

Also, in the third embodiment illustrated in Fig. 6 and Fig. 7, the other configurations, the operation, and the effects are particularly the same as those in the above first embodiment. Thus, in Fig. 6 and Fig. 7, the same portions as those in the preceding drawings will be denoted by the same reference signs, and the detailed description thereon will not be made.

### [Fourth Embodiment] (not belonging to the invention)

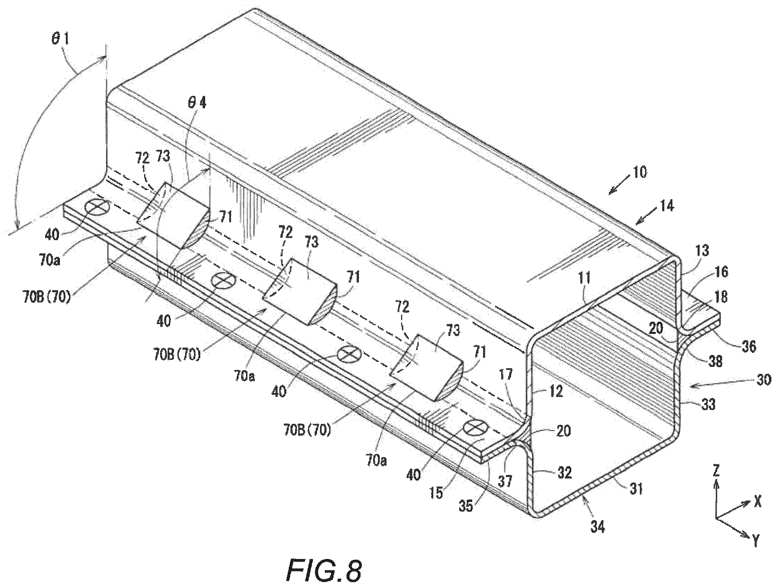

Fig. 8 is a perspective view illustrating a fourth embodiment of the panel joint structure not belonging to the present invention.

In this fourth embodiment illustrated in Fig. 8, instead of the first embodiment illustrated in Fig. 1, that is, the load transmission section 50 (the bead 50B) having the inclined surface 53 that is formed with the ridgeline R1 at the center of the bead 50B in the Y-direction, a load transmission section 70 having a flat-shaped inclined surface 73 is particularly adopted.

That is, as illustrated in Fig. 8, the above-described first panel member 10 is particularly provided with the load transmission section 70 in the manner to be located near the joint section 40.

The above-described load transmission section 70 is particularly formed by a bead 70B. This load transmission section 70 (the bead 70B) is provided between the second side wall 12 and the first flange section 15 of the panel body section 14.

An inclined surface 73 of the above-described load transmission section 70 is particularly set such that an angle θ4 defined with the second side wall 12 of the panel body section 14 is larger than the angle (the right angle) θ1 defined by the second side wall 12 and the portion in the short direction of the first flange section 15 in the panel body section 14.

In this fourth embodiment, the angle θ4, which is defined by the inclined surface 73 of the load transmission section 70 and the second side wall 12, is particularly set as the obtuse angle. Meanwhile, the angle θ1, which is defined by the portion in the short direction of the first flange section 15 and the second side wall 12, is particularly set at 90 degrees or about 90 degrees. That is, the load transmission section 70 is formed to satisfy a relational expression θ4 > θ1.

As illustrated in Fig. 8, the above-described load transmission section 70 (the bead 70B) particularly includes: a pair of vertical walls 71, 72 separated in the Y-direction; and the flat-shaped inclined surface 73 that couples these vertical walls 71, 72. The inclined surface 73 is inclined in the direction toward the second flange section 35 of the second panel member 30 as being stretched toward the distal end side direction in the short direction of the first flange section 15.

The thus-formed load transmission section 70 (the bead 70B) is particularly provided between the second side wall 12 and the first flange section 15 of the panel body section 14. In the Y-direction, the load transmission section 70 is particularly provided between two each of the plural joint sections 40, 40.

As illustrated in Fig. 8, in the short direction of the first flange section 15, that is, in the X-direction, a flange distal end side end portion 70a of the above-described load transmission section 70 in the short direction of the flange section is particularly provided to be located in the region (in detail, in the area on the extended line) between the corner section side end portion of the joint section 40 and the distal end side end portion of the joint section 40.

In this embodiment, the flange distal end side end portion 70a of the load transmission section 70 is particularly provided on the imaginary line that connects the central portions of the nuggets 40n (see preceding drawings) as the joint sections 40, each of which is adjacent to the load transmission section 70 in the longitudinal direction of the flange section.

Particularly, the bead 70B that forms the above-described load transmission section 70 has an internal space, and this internal space is filled with the above-described adhesive 20.

Also, in this fourth embodiment, it is possible to diffuse the peeling load to the above-described joint section 40 via the load transmission section 70 and to thereby reduce the load that is applied to the corner section side end portion of the adhesive 20.

Also, in the fourth embodiment illustrated in Fig. 8, the other configurations, the operation, and the effects are the same as those in the above first embodiment. Thus, in Fig. 8, the same portions as those in the preceding drawings will be denoted by the same reference signs, and the detailed description thereon will not be made.

### [Fifth Embodiment] (not belonging to the invention)

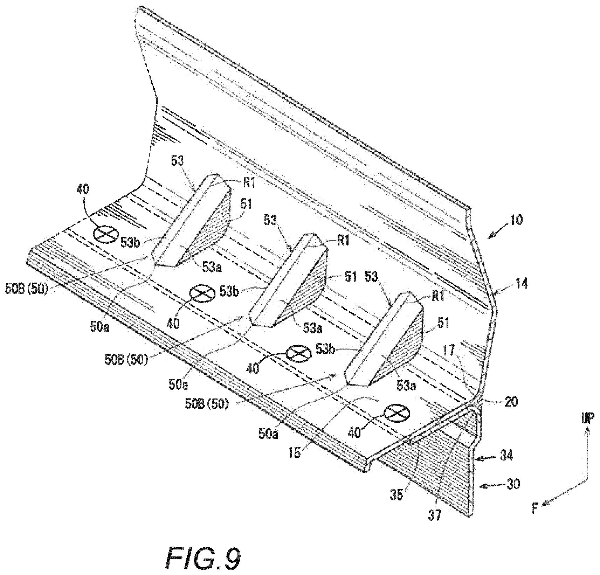

Fig. 9 is a perspective view illustrating an embodiment in which the panel joint structure is particularly adopted for a front body structure of a vehicle.

In this fifth embodiment, not belonging to the invention, the first panel member 10 is particularly a dash upper panel (or an upper dash panel), and the second panel member 30 is particularly a dash lower panel (or a lower dash panel).

The second flange section 35 that extends to the front of the vehicle via the corner section 37 is particularly formed in an upper end portion of the dash lower panel (the second panel member 30) that separates an engine room or an engine compartment (a motor room or a motor compartment in a case of an electric vehicle) and a cabin in a vehicle longitudinal direction.

Meanwhile, the first flange section 15 that extends to the front of the vehicle via the corner section 17 is particularly formed at a lower end of the panel body section 14 of the dash upper panel (the first panel member 10).

The joint section 40 is particularly provided to join the second flange section 35 of the dash lower panel (the second panel member 30) and the first flange section 15 of the dash upper panel (the first panel member 10) in the state where the first flange section 15 and the second flange section 35 contact each other.

The plural above-described joint sections 40 are particularly provided at specified intervals in the longitudinal direction of the flange sections 15, 35, that is, in a vehicle width direction.

As illustrated in Fig. 9, particularly, the adhesive 20 is continuously provided along the longitudinal direction of the corner section 17 of the dash upper panel (the first panel member 10) and the corner section 37 of the dash lower panel (the second panel member 30), and the adhesive 20 adheres the first flange section 15 and the second flange section 35.

As illustrated in Fig. 9, the load transmission section 50, which is particularly formed by the bead 50B, is provided between the panel body section 14 and the first flange section 15 of the dash upper panel (the first panel member 10). This load transmission section 50 is provided near the joint section 40 in a manner to be located between the plural joint sections 40, 40.

Similar to the above embodiment, the above-described load transmission section 50 particularly has the inclined surface 53 and is formed such that the angle defined by this inclined surface 53 and the panel body section 14 is larger than the angle defined by the portion in the short direction of the first flange section 15 and the panel body section 14.

That is, the angle that is defined by the portion in the short direction of the first flange section 15 and the panel body section 14 is particularly set at approximately 100 degrees, and the angle that is defined by the inclined surface 53 of the load transmission section 50 and the panel body section 14 is particularly set at 134 degrees (or about 134 degrees) that is larger than approximately 100 degrees. However, the numerical values of the above angles constitute one example, and the above angles are not limited thereto.

Furthermore, as illustrated in Fig. 9, in the short direction (e.g. in the vehicle front-back direction or the vehicle longitudinal direction) of the first flange section 15, the flange distal end side end portion 50a of the above-described load transmission section 50 is particularly provided to be located in the region (in detail, in an extended area that connects the regions of the adjacent joint sections 40, 40) between the corner section side end portion of the joint section 40 and the distal end side end portion of the joint section 40 in the short direction of the flange section.

In this fifth embodiment, similar to the above embodiment, the flange distal end side end portion 50a of the load transmission section 50 is particularly provided on the imaginary line that connects the central portions of the joint sections 40, each of which is adjacent to the load transmission section 50 in the longitudinal direction of the flange section.

In addition, the entire internal space of the bead 50B is particularly filled with the above-described adhesive 20.

As described above, the above configuration is adopted for the dash upper panel (the first panel member 10). Accordingly, during normal travel of the vehicle, it is possible to suppress the stress concentration on the end portion on the corner section 17 side of the adhesive 20 when a repeated load is applied to the dash upper panel (the first panel member 10) from a top damper in a front suspension.

That is, the peeling load is diffused to the joint section 40 via the above-described load transmission section 50. In this way, it is possible to reduce the load that is applied to the corner section side end portion of the adhesive 20.

Also, in this fifth embodiment illustrated in Fig. 9, the other configurations, the operation, and the effects are substantially the same as those in the above embodiment. Thus, in Fig. 9, the same portions as those in the preceding drawings will be denoted by the same reference signs, and the detailed description thereon will not be made.

In Fig. 9, an arrow F indicates a vehicle front direction, and an arrow UP indicates a vehicle upper direction.

In correspondence between the configuration in the present fifth embodiment and the above-described embodiments, the joint section 40 in the present fifth embodiment corresponds to the nugget 40n that is formed by spot welding in the first embodiment. However, the joint section 40 may be formed by machine joining, that is, joining and one-sided machine joining using a bolt, a nut, a rivet, a self-piercing rivet (a so-called SPR), furthermore, friction stir joint welding and laser welding.

In the above embodiment, each of the first panel member 10 and the second panel member 30 is formed of the steel plate so as to allow spot welding. The panel members 10, 30 include a metal member and fiber reinforced plastic, and include joining of the same materials, such as the steel plates or aluminum plates, and joining of different materials, such as the steel plate and the aluminum plate.

Furthermore, the corner section 17 is not limited to the corner section in which the panel body section 14 and the first flange section 15 cross each other at the right angle. In order to enable a molding process, the corner section 17 includes a corner section in which the panel body section 14 and the first flange section 15 are coupled to each other via a curved portion (a so-called rounded portion) and a corner section in which the panel body section 14 and the first flange section 15 are coupled to each other via a tapered portion.

In addition, the structure adhesive is used as the above-described adhesive 20, and the representative example thereof is the epoxide-based adhesive. However, the adhesive 20 is not limited to the epoxide-based adhesive. Any of the structure adhesives such as the urethane-based adhesive, the acrylic adhesive, and the modified silicone-based adhesive may be used. In addition, any type of the adhesives can be used as long as such an adhesive is used to join the vehicle body.

The present invention is not only limited to the configuration in each of the above-described embodiments but can be implemented in various embodiments within the scope defined by the appended claims.

### [Industrial Applicability]

As it has been described so far, the present invention is useful for the panel joint structure that includes: the first panel member including the panel body section and the first flange section that extends from the panel body section via the corner section; and the second panel member that is arranged to oppose the first flange section, and that fixedly joins the first flange section of the first panel member and the second panel member by the joint section and the adhesive.

### [Description of Reference Signs and Numerals]

10 First panel member
14 Panel body section
15 First flange section
17 Corner section
20 Adhesive
30 Second panel member
34 Second panel body section
35 Second flange section
37 Second corner section
40 Joint section
40a Corner section side end portion
40b Distal end side end portion
40c Central portion
50, 70 Load transmission section
50a, 60a, 70a Flange distal end side end portion
50B, 70B Bead
53, 63, 73 Inclined surface
54, 64 Internal space
60 Second load transmission section
60B Second bead

## Claims

1. A panel joint structure comprising:
a first panel member (10) including a panel body section (14) and a first flange section (15, 16) that extends from the panel body section (14) via a corner section (17);
a second panel member (30) that is arranged to oppose the first flange section (15, 16);
a joint section (40) that joins the first flange section (15, 16) and the second panel member (30) in a state where the first flange section (15, 16) and the second panel member (30) contact each other; and
an adhesive (20) that is continuously provided along a longitudinal direction of the corner section (17) and adheres the first flange section (15, 16) and the second panel member (30), wherein
the first panel member (10) includes a load transmission section (50), particularly near the joint section (40), the load transmission section (50) being provided between the panel body section (14) and the first flange section (15, 16) and being set such that an angle (θ2) defined with the panel body section (14) is larger than an angle (θ1) defined by the panel body section (14) and a portion in a short direction of the first flange section (15, 16),
in the short direction of the first flange section (15, 16), a flange distal end side end portion (50a) of the load transmission section (50) in the short direction of the first flange section (15, 16) is provided to be located in a region between a corner section side end portion (40a) of the joint section (40) and a flange distal end side end portion (40b) of the joint section (40) in the short direction of the first flange section (15, 16),
the second panel member (30) is provided with a second flange section (35, 36) that extends from a second panel body section (34) via a second corner section (37),
the second flange section (35, 36) is arranged to oppose the first flange section (15, 16),
the second panel member (30) includes a second load transmission section (60), particularly near the joint section (40), the second load transmission section (60) being provided between the second panel body section (34) and the second flange section (35, 36) and being set such that an angle (θ3) defined with the second panel body section (34) is larger than an angle defined by the second panel body section (34) and a portion in a short direction of the second flange section (35, 36), and
a flange distal end side end portion (60a) of the second load transmission section (60) in the short direction of the second flange section (35, 36) and the flange distal end side end portion (50a) of the load transmission section (50) in the first panel member (10) are provided at substantially the same positions.

2. The panel joint structure according to claim 1, wherein
the plural joint sections (40) are provided at spaced intervals in a longitudinal direction of the first flange section (15, 16), and
the flange distal end side end portion (50a) of the load transmission section (50) is provided on an imaginary line (β) that connects central portions of the joint sections (40), each of which is adjacent to the load transmission section (50) in the longitudinal direction of the first flange section (15, 16).

3. The panel joint structure according to any one of the preceding claims, wherein
the load transmission section (50) is formed by a bead (50B), and an internal space of the bead (50B) is filled with the adhesive (20).

4. The panel joint structure according to any one of the preceding claims, wherein
each of the load transmission section (50) and the second load transmission section (60) is formed by a bead (50B, 60B), and internal space of each of the beads (50B, 60B) is filled with the adhesive (20).

5. The panel joint structure according to claim 3 or 4, wherein
a flange distal end side end portion of the adhesive (20) in the internal space of the bead (50B, 60B) is provided in a region (α) between a corner section side end portion (40a) of the joint section (40) and the flange distal end side end portion (40b) of the joint section (40) in the short direction of the flange section(15, 16, 35, 36).

6. The panel joint structure according to any one of claims 3 to 5, wherein
the bead (50B) includes an inclined surface (53) that is inclined in a direction toward the second panel member (30) as being stretched toward a distal end side direction in the short direction of the first flange section (15, 16), and
the inclined surface (53) couples the panel body section (14) and the first flange section (15, 16) of the first panel member (10).

7. The panel joint structure according to claim 6, wherein
the load transmission section (50, 50B) includes a pair of vertical walls (51, 52) separated in a longitudinal direction of the first flange sections (15, 16) and the inclined surface (53) that couples these vertical walls (51, 52) and
the inclined surface (53) is inclined in a direction toward the second flange section (35) of the second panel member (30) as being stretched toward a distal end side direction in the short direction of the first flange section (15) .

8. The panel joint structure according to claim 7, wherein
the inclined surface (53) has two slant sections (53a, 53b) that are inclined in opposite directions, and
between these slant sections (53a, 53b), a ridgeline (R1) is formed to be inclined in the direction toward the second flange section (35) as being stretched toward the distal end side direction of the first flange section (15).

9. A front body structure for a vehicle, comprising the panel joint structure according to any one of the preceding claims, wherein
the longitudinal direction is a vehicle width direction, and
the short direction is a vehicle longitudinal direction or a vehicle front-back direction.

10. The front body structure according to claim 9, wherein
the first panel member (10) is a dash upper panel,
the second panel member (30) is a dash lower panel, and
the dash lower panel is configured to separate a compartment and a cabin in the vehicle longitudinal direction or in the vehicle front-back direction.

11. The front body structure according to claim 9 or 10, wherein
the second flange section (35) extends forward in the vehicle longitudinal direction or in the vehicle front-back direction, and/or is formed in an upper end portion of the dash lower panel.

12. The front body structure according to claim 10, wherein
the first flange section (15) extends forward in the vehicle longitudinal direction or in the vehicle front-back direction, and/or is formed at a lower end of the panel body section (14) of the dash upper panel.

13. The front body structure according to any one of claims 9 to 12, wherein
plural joint sections (40) are provided in the vehicle width direction.

14. A vehicle comprising the front body structure according to any one of claims 9 to 13, or the panel joint structure according to any one of claims 1 to 8.

## Patentansprüche

1. Eine Plattenverbindungsstruktur, die Folgendes umfasst:
ein erstes Plattenelement (10), das einen Plattenkörperabschnitt (14) und einen ersten Flanschabschnitt (15, 16) beinhaltet, der sich vom Plattenkörperabschnitt (14) über einen Eckabschnitt (17) erstreckt;
ein zweites Plattenelement (30), das so angeordnet ist, dass es dem ersten Flanschabschnitt (15, 16) gegenüberliegt;
einen Verbindungsabschnitt (40), der den ersten Flanschabschnitt (15, 16) und das zweite Plattenelement (30) in einem Zustand miteinander verbindet, in dem der erste Flanschabschnitt (15, 16) und das zweite Plattenelement (30) einander berühren; und
einen Klebstoff (20), der kontinuierlich entlang einer Längsrichtung des Eckabschnitts (17) bereitgestellt wird und den ersten Flanschabschnitt (15, 16) und das zweite Plattenelement (30) verklebt, wobei
das erste Plattenelement (10) einen Lastübertragungsabschnitt (50), insbesondere in der Nähe des Verbindungsabschnitts (40) enthält, wobei der Lastübertragungsabschnitt (50) zwischen dem Plattenkörperabschnitt (14) und dem ersten Flanschabschnitt (15, 16) bereitgestellt wird und so eingestellt ist, dass ein mit dem Plattenkörperabschnitt (14) definierter Winkel (θ2) größer ist als ein durch den Plattenkörperabschnitt (14) und einen Bereich in einer kurzen Richtung des ersten Flanschabschnitts (15, 16) definierter Winkel (θ1), definiert ist,
in der kurzen Richtung des ersten Flanschabschnitts (15, 16) ein Endbereich (50a) am distalen Flanschende (*flange distal end side end portion (50a)*) des Lastübertragungsabschnitts (50) in der kurzen Richtung des ersten Flanschabschnitts (15, 16) so bereitgestellt wird, dass er in einem Bereich zwischen einem eckbereichsseitigen Endbereich (40a) des Verbindungsabschnitts (40) und einem Endbereich (40b) am distalen Flanschende des Verbindungsabschnitts (40) in der kurzen Richtung des ersten Flanschabschnitts (15, 16) angeordnet ist,
das zweite Plattenelement (30) mit einem zweiten Flanschabschnitt (35, 36) versehen ist, der sich von einem zweiten Plattenkörperabschnitt (34) über einen zweiten Eckabschnitt (37) erstreckt,
der zweite Flanschabschnitt (35, 36) so angeordnet ist, dass er dem ersten Flanschabschnitt (15, 16) gegenüberliegt,
das zweite Plattenelement (30) einen zweiten Lastübertragungsabschnitt (60) beinhaltet, insbesondere in der Nähe des Verbindungsabschnitts (40), wobei der zweite Lastübertragungsabschnitt (60) zwischen dem zweiten Plattenkörperabschnitt (34) und dem zweiten Flanschabschnitt (35, 36) bereitgestellt wird und so eingestellt ist, dass ein Winkel (θ3), der mit dem zweiten Plattenkörperabschnitt (34) definiert ist, größer ist als ein Winkel, der durch den zweiten Plattenkörperabschnitt (34) und einen Bereich in einer kurzen Richtung des zweiten Flanschabschnitts (35, 36) definiert ist, und
ein Endbereich (60a) am distalen Flanschende des zweiten Lastübertragungsabschnitts (60) in der kurzen Richtung des zweiten Flanschabschnitts (35, 36) und der Endbereich (50a) am distalen Flanschende des Lastübertragungsabschnitts (50) im ersten Plattenelement (10) an im Wesentlichen denselben Positionen vorgesehen sind.

2. Die Plattenverbindungsstruktur nach Anspruch 1, wobei
die Vielzahl von Verbindungsabschnitten (40) in einer Längsrichtung des ersten Flanschabschnitts (15, 16) in beabstandeten Intervallen vorgesehen sind, und wobei
der Endbereich (50a) am distalen Flanschende des Lastübertragungsabschnitts (50) auf einer imaginären Linie (β) bereitgestellt wird, die zentrale Bereiche der Verbindungsabschnitte (40) verbindet, von denen jeder in Längsrichtung des ersten Flanschabschnitts (15, 16) an den Lastübertragungsabschnitt (50) angrenzt.

3. Die Plattenverbindungsstruktur nach irgendeinem der vorstehenden Ansprüche, wobei
der Lastübertragungsabschnitt (50) durch einen Wulst (50B) gebildet wird und ein Innenraum des Wulstes (50B) mit dem Klebstoff (20) gefüllt ist.

4. Die Plattenverbindungsstruktur nach irgendeinem der vorstehenden Ansprüche, wobei
jeder von dem Lastübertragungsabschnitt (50) und dem zweiten Lastübertragungsabschnitt (60) durch einen Wulst (50B, 60B) gebildet wird, und der Innenraum jeder der Wülste (50B, 60B) mit dem Klebstoff (20) gefüllt ist.

5. Die Plattenverbindungsstruktur nach Anspruch 3 oder 4, wobei
ein Endbereich des Klebstoffs (20) am distalen Flanschende im Innenraum des Wulstes (50B, 60B) in einem Bereich (α) zwischen einem eckenabschnittsseitigen Endbereich (40a) des Verbindungsabschnitts (40) und dem Endbereich (40b) am distalen Flanschende des Verbindungsabschnitts (40) in der kurzen Richtung des Flanschabschnitts (15, 16, 35, 36) bereitgestellt wird.

6. Die Plattenverbindungsstruktur nach irgendeinem der Ansprüche 3 bis 5, wobei
der Wulst (50B) eine geneigte Fläche (53) beinhaltet, die in Richtung des zweiten Plattenelements (30) geneigt ist, wenn (as) sie in Richtung einer distalen Endseitenrichtung in der kurzen Richtung des ersten Flanschabschnitts (15, 16) gestreckt ist, und wobei
die geneigte Fläche (53) den Plattenkörperabschnitt (14) und den ersten Flanschabschnitt (15, 16) des ersten Plattenelements (10) koppelt.

7. Die Plattenverbindungsstruktur nach Anspruch 6, wobei
der Lastübertragungsabschnitt (50, 50B) Folgendes beinhaltet: ein Paar vertikaler Wände (51, 52), die in einer Längsrichtung der ersten Flanschabschnitte (15, 16) aufgeteilt sind, und die geneigte Fläche (53), die diese vertikalen Wände (51, 52) verbindet, und wobei
die geneigte Fläche (53) in einer Richtung zum zweiten Flanschabschnitt (35) des zweiten Plattenelements (30) hin geneigt sind, wenn (as) sie in Richtung einer distalen Endseitenrichtung in der kurzen Richtung des ersten Flanschabschnitts (15) gestreckt sind.

8. Die Plattenverbindungsstruktur nach Anspruch 7, wobei
die geneigte Fläche (53) zwei schräge Abschnitte (53a, 53b) aufweist, die in entgegengesetzten Richtungen geneigt sind, und wobei
zwischen diesen schrägen Abschnitten (53a, 53b) eine Gratlinie (R1) ausgebildet ist, die in Richtung des zweiten Flanschabschnitts (35) geneigt ist, wenn (as) sie in Richtung der distalen Endseitenrichtung des ersten Flanschabschnitts (15) gestreckt ist.

9. Eine vordere Karosseriestruktur für ein Fahrzeug, die die Plattenverbindungsstruktur nach irgendeinem der vorstehenden Ansprüche umfasst, wobei
die Längsrichtung eine Fahrzeugbreitenrichtung ist und wobei
die kurze Richtung eine Fahrzeug-Längsrichtung oder eine Fahrzeug-Vorne-Hinten-Richtung ist.

10. Die vordere Karosseriestruktur nach Anspruch 9, wobei
das erste Plattenelement (10) ein oberes Armaturenbrettelement ist,
das zweite Plattenelement (30) ein unteres Armaturenbrettelement ist, und wobei
das untere Armaturenbrettelement dazu konfiguriert ist, ein Abteil und eine Kabine in Fahrzeug-Längsrichtung oder in Fahrzeug-Vorne-Hinten-Richtung zu teilen.

11. Die vordere Karosseriestruktur nach Anspruch 9 oder 10, wobei
sich der zweite Flanschabschnitt (35) in Fahrzeug-Längsrichtung oder in Fahrzeug-Vorne-Hinten-Richtung nach vorne erstreckt und/oder in einem oberen Endbereich des unteren Armaturenbrettelements ausgebildet ist.

12. Die vordere Karosseriestruktur nach Anspruch 10, wobei
sich der erste Flanschabschnitt (15) nach vorne in Fahrzeug-Längsrichtung oder in Fahrzeug-Vorne-Hinten-Richtung erstreckt und/oder an einem unteren Ende des Plattenkörperabschnitts (14) des oberen Armaturenbrettelements ausgebildet ist.

13. Die vordere Karosseriestruktur nach irgendeinem der Ansprüche 9 bis 12, wobei
in Fahrzeugbreitenrichtung eine Vielzahl von Verbindungsabschnitten (40) bereitgestellt wird.

14. Ein Fahrzeug, das die vordere Karosseriestruktur nach irgendeinem der Ansprüche von 9 bis 13 oder die Plattenverbindungsstruktur nach irgendeinem der Ansprüche von 1 bis 8 umfasst.

## Revendications

1. Une structure de joint de panneau comprenant :
un premier élément de panneau (10) incluant une section de corps de panneau (14) et une première section de bride (15, 16) qui s'étend à partir de la section de corps de panneau (14) via une section de coin (17) ;
un deuxième élément de panneau (30) qui est disposé de manière à s'opposer à la première section de bride (15, 16) ;
une section de joint (40) qui relie la première section de bride (15, 16) et le deuxième élément de panneau (30) dans un état où la première section de bride (15, 16) et le deuxième élément de panneau (30) sont en contact l'un avec l'autre ; et
un adhésif (20) qui est fourni en continu le long d'une direction longitudinale de la section de coin (17) et qui adhère à la première section de bride (15, 16) et au deuxième élément de panneau (30), sachant que
le premier élément de panneau (10) inclut une section de transmission de charge (50), en particulier à proximité de la section de joint (40), que la section de transmission de charge (50) est fournie entre la section de corps de panneau (14) et la première section de bride (15, 16) et est réglée de manière qu'un angle (θ2) défini avec la section de corps de panneau (14) est plus grand qu'un angle (θ1) défini par la section de corps de panneau (14) et une partie dans une direction courte de la première section de bride (15, 16),
dans la direction courte de la première section de bride (15, 16), une partie d'extrémité (50a) du côté de l'extrémité distale de la bride, de la section de transmission de charge (50) dans la direction courte de la première section de bride (15, 16) est fournie pour être située dans une région entre une partie d'extrémité (40a) du côté de la section de coin, de la section de joint (40) et une partie d'extrémité (40b) du côté de l'extrémité distale de la bride, de la section de joint (40) dans la direction courte de la première section de bride (15, 16),
le deuxième élément de panneau (30) est pourvu d'une deuxième section de bride (35, 36) qui s'étend à partir d'une deuxième section de corps de panneau (34) via une deuxième section de coin (37),
la deuxième section de bride (35, 36) est disposée pour s'opposer à la première section de bride (15, 16),
le deuxième élément de panneau (30) inclut une deuxième section de transmission de charge (60), notamment à proximité de la section de joint (40), la deuxième section de transmission de charge (60) étant fournie entre la deuxième section de corps de panneau (34) et la deuxième section de bride (35, 36), et étant réglée de manière qu'un angle (θ3) défini avec la deuxième section de corps de panneau (34) est plus grand qu'un angle défini par la deuxième section de corps de panneau (34) et une partie dans une direction courte de la deuxième section de bride (35, 36), et que
une partie d'extrémité (60a) du côté de l'extrémité distale de la bride, de la deuxième section de transmission de charge (60) dans la direction courte de la deuxième section de bride (35, 36) et la partie d'extrémité (50a) du côté de l'extrémité distale de la bride, de la section de transmission de charge (50) dans le premier élément de panneau (10) sont fournies à des positions essentiellement identiques.

2. La structure de joint de panneau d'après la revendication 1, sachant que
plusieurs sections de joint (40) sont fournies à des intervalles espacés dans une direction longitudinale de la première section de bride (15, 16), et que
la partie d'extrémité (50a) du côté de l'extrémité distale de la bride, de la section de transmission de charge (50) est fournie sur une ligne imaginaire (β) qui relie des parties centrales des sections de joint (40), dont chacune est adjacente à la section de transmission de charge (50) dans la direction longitudinale de la première section de bride (15, 16).

3. La structure de joint de panneau d'après l'une quelconque des revendications précédentes, sachant que
la section de transmission de charge (50) est formée par un bourrelet (bead) (50B), et qu'un espace interne du bourrelet (50B) est rempli par l'adhésif (20).

4. La structure de joint de panneau d'après l'une quelconque des revendications précédentes, sachant que
chacune de la section de transmission de charge (50) et de la deuxième section de transmission de charge (60) est formée par un bourrelet (50B, 60B), et que l'espace interne de chacun des bourrelets (50B, 60B) est rempli par l'adhésif (20).

5. La structure de joint de panneau d'après la revendication 3 ou 4, sachant que
une partie d'extrémité du côté de l'extrémité distale de la bride, de l'adhésif (20) dans l'espace interne du bourrelet (50B, 60B) est fournie dans une région (α) entre une partie d'extrémité (40a) du côté de la section de coin, de la section de joint (40) et la partie d'extrémité (40b) du côté de l'extrémité distale de la bride de la section de joint (40) dans la direction courte de la section de bride(15, 16, 35, 36).

6. La structure de joint de panneau d'après l'une quelconque des revendications de 3 à 5, sachant que
le bourrelet (50B) inclut une surface inclinée (53) qui est inclinée dans une direction vers le deuxième élément de panneau (30) en étant étirée vers une direction du côté de l'extrémité distale dans la direction courte de la première section de bride (15, 16), et que
la surface inclinée (53) couple la section de corps de panneau (14) et la première section de bride (15, 16) du premier élément de panneau (10).

7. La structure de joint de panneau d'après la revendication 6, sachant que
la section de transmission de charge (50, 50B) inclut une paire de parois verticales (51, 52) séparées dans une direction longitudinale des premières sections de bride (15, 16), et la surface inclinée (53) qui couple ces parois verticales (51, 52) et que
la surface inclinée (53) est inclinée dans une direction vers la deuxième section de bride (35) du deuxième élément de panneau (30) en étant étirée vers une direction du côté de l'extrémité distale, dans la direction courte de la première section de bride (15).

8. La structure de joint de panneau d'après la revendication 7, sachant que
la surface inclinée (53) présente deux sections obliques (53a, 53b) qui sont inclinées dans des directions opposées, et que
entre ces sections obliques (53a, 53b), une ligne de crête (R1) est formée pour être inclinée dans la direction vers la deuxième section de bride (35) en étant étirée vers la direction du côté de l'extrémité distale, de la première section de bride (15).

9. Une structure avant de carrosserie pour un véhicule, comprenant la structure de joint de panneau d'après l'une quelconque des revendications précédentes, sachant que
la direction longitudinale est une direction de largeur du véhicule, et que
la direction courte est une direction longitudinale du véhicule ou une direction avant-arrière du véhicule.

10. La structure avant de carrosserie d'après la revendication 9, sachant que
le premier élément de panneau (10) est un panneau supérieur de tableau de bord, le deuxième élément de panneau (30) est un panneau inférieur de tableau de bord, et que
le panneau inférieur de tableau de bord est configuré pour séparer un compartiment et une cabine dans la direction longitudinale du véhicule ou dans la direction avant-arrière du véhicule.

11. La structure avant de carrosserie d'après la revendication 9 ou 10, sachant que
la deuxième section de bride (35) s'étend vers l'avant dans la direction longitudinale du véhicule ou dans la direction avant-arrière du véhicule, et/ou qu'elle est formée dans une partie d'extrémité supérieure du panneau inférieur de tableau de bord.

12. La structure avant de carrosserie d'après la revendication 10, sachant que
la première section de bride (15) s'étend vers l'avant dans la direction longitudinale du véhicule ou dans la direction avant-arrière du véhicule, et/ou qu'elle est formée à une extrémité inférieure de la section de corps de panneau (14) du panneau supérieur de tableau de bord.

13. La structure avant de carrosserie d'après l'une quelconque des revendications de 9 à 12,
sachant que plusieurs sections de joint (40) sont fournies dans la direction de la largeur du véhicule.

14. Un véhicule comprenant la structure avant de carrosserie d'après l'une quelconque des revendications de 9 à 13, ou la structure de joint de panneau d'après l'une quelconque des revendications de 1 à 8.
